# EUROPEAN PATENT APPLICATION

(11) **EP 1 855 292 A2**
(43) Date of publication of application: **14.11.2007**
(21) Application number: 07104377.2
(22) Date of filing: 16.03.2007
(51) Int. Cl.: G11B 33/04, B65D 85/57

(54) **Envelope for optical discs**

(30) Priority: 28.03.2006 PL 37931006
(71) Applicant: Takt Kwiatkowksi i Miadzel spolka jawna, 32-329 Boleslaw (PL)
(72) Inventor: Wójcik, Jerzy, 44-100 Gliwice (PL); Kwiatkowski, Krzysztof, 02-798 Warszawa (PL); Miadzel, Stanislaw, 32-300 Olkusz (PL)
(74) Representative: Korga, Leokadia

(57) **Abstract**

A wire electrode supply device capable of preventing slack and snapping of a wire electrode even using a heavy wire bobbin without using a wire lectrode tension detector. A pulley is provided between the wire bobbin driven by a torque motor and a brake roller. The wire electrode unswinds from the wire bobbin, passes through the pulley, brake roller and a workpiece work area, and is taken up by a wind-up roller. When the wire electrode traveling speed is changed from fast to slow, the pulley descends to prevent the wire electrode from slackening between the wire bobbin and the brake roller. When the traveling speed is changed from slow to fast, the back tension from the torque motor is reduced for a predetermined period of time, reducing tension on the wire electrode and preventing it from snapping. Also, the pulley descends, rotating the wire bobbin in the feeding direction and quickening tracking of the shift to fast feed speed, enabling snapping of the wire electrode to be prevented even when a heavy wire bobbin is used.

## Description

The subject of the invention is an envelope for optical drivers especially to be used as a loose insert to join in with the backbone of magazines, brochures and books by gluing in or sewing.

From the Polish description of the utility model no. W-110790, an envelope for flat objects is known, in particular for CD-ROMs. The said envelope is formed in the shape of a rectangular, and its characteristic feature is transparent front wall and thickened back wall. Both walls are permanently connected with each other, on the edges, by pressure welding that creates stiffened edges on the whole perimeter. Additionally, the edges are joined by three stiffening welds. The front wall contains curvilinear cuts dividing the wall into a bottom permanent part and upper drawing part.

A packaging for a CD-ROM in the form of a cover or insert to magazines is also known from Polish application description no. P-331642. The invention concerns a cover and an insert to a magazine that has back part and front part joined to each other along the folding. The front part has a compartment for a CD-ROM. The compartment for CD-ROM creates the whole entity with the front part of the cover and insert. In the area of CD-ROM front part there is a hole cut.

The package being a set of two envelopes exclusively for CD in magazines, is known from a German description of the utility model no. DE 20010914. The set has folds formed in the shape of an envelope in which to CDs are placed next to each other. The closing flap is formed in the upper edge of the front wall of the envelope. The back wall has a fold formed and this fold is glued in a magazine, and the extension of the front wall of the envelope covers folded back wall of the envelope. Parallel to the gluing in edge in the backbone of magazine there is a perforation that goes through at least one cut on the front wall of the magazine. The same perforation is at the back wall and after folding the envelopes one is on another one and this enables tearing it out of a magazine. The forming of the pocket for CD takes place by placing on the back wall two cuts running parallel to each other. The separation of the two envelopes is obtained by using perforation between them.

An envelope for optical drivers consisting of a rectangular pattern from which, after folding along the fold line, an envelope is formed. According to the invention the envelope is characterised in that at extension of the front wall of the envelope or at the extension of the back wall of the envelope there is a cut performed that closes the envelope.
The forming of the crease is advantageous and it creates the upper edge of the cut.
It is advantageous that in the area between the crease and the front of the cut there is at least one crease parallel to crease creating the upper edge.
It is also advantageous that the creases are the perforation.
Moreover, it is advantageous that parallel to the edge of gluing in, above crease creating the upper edge there is at least one perforation.
It is suggested to perform, at the extension of the front wall or back wall of the envelope, two holes to put the envelope in the binder.
A window cut on the front wall or on the back wall at any position is also advantageous.
It is advantageous to for the crease on one or two side edges of rectangular strips.
It is advantageous that parallel to gluing in edge, at the height matching the height of the opposite wall of the envelope there is a crease formed, ending at the height of a crease of side edges.
It is also advantageous that the formed crease, is parallel to the gluing in edge at the height matching the height of the opposite wall of the envelope, running across the whole width of the envelope.
It is favourable to give the cut the shape of a little tongue or polygon.
An envelope for optical drivers consisting of a rectangular pattern from which, after folding along the fold line, an envelope is formed. According to the invention kind the envelope is characterised in that at the open edge of sliding the optical disc, behind perforation, or crease there are at least two projections formed and they constitute extension of the front wall or back wall of the envelope.
It is also advantageous that that at one or two opposite edges of the envelope there are, formed by a crease, rectangular strips.
It is also advantageous that on one of the side strips there are two holes performed to put the file indo binder.
A window cut on the front wall or on the back wall at any position is also advantageous.
It is suggested to seal the sliding edge of the optical disc with a foil or paper sticker.

An envelope for optical drivers, according to the inventions, is first of all devoted to be used as loose insert envelope or glue in insert used to automatic insert of an envelope with a CD or DVD to magazines or books during bookbinding. Proper construction of the envelope enables easy, safe and automatic insert of the envelope to the magazine and it does not cause damage of the envelope's contents i.e. an optical driver. The performance of crease strips at the envelope's edges enables cutting the magazine or the book on 3-knife trimmer without worry concerning the damage of the contents. Performance of crease strips at different edges enables gluing in the envelope to lower or upper part of the magazine or book. Moreover, the construction of the envelope enables automatic packaging of the optical driver to envelopes.

The performed perforation at the gluing edge facilitates easy and aesthetic tearing out of the envelope from a magazine or book without damaging neither the envelope nor the backbone of the publishing unit it was glued into. The construction of the cut in the shape of a little tongue allows free closing of the envelope, by its movement behind the back wall or only behind the disc and leaving the little tongue inside.
The performance of the holes for binders placement allows any permanent archiving of disc in the packaging. Moreover, performance of the envelope of paper or cardboard enables any graphic individualisation of the package. The window cut in the envelope may a decorative element and at the same time it allows disc imprint visualisation. The performance of the packaging of cellulose raw material i.e. paper or cardboard facilitates its recycling and is favourable due to ecological reasons.

The subject of inventions in performance examples is presented in a drawing, at which:

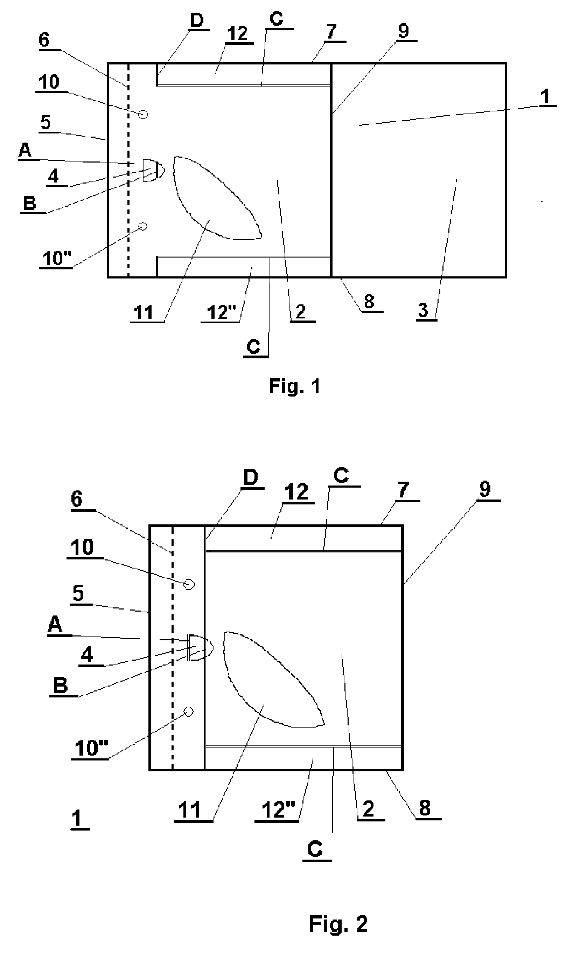

Fig.1 present the view of the first envelope's unfold intersection;
Fig.2 presents the view of the first envelope from the front;

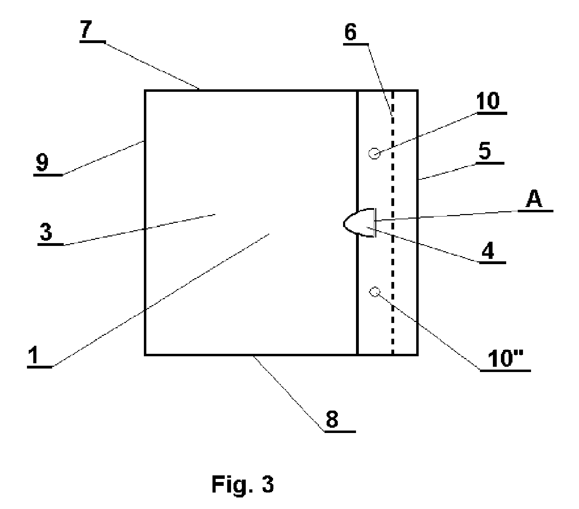

Fig.3 presents the view of the envelope from the back;

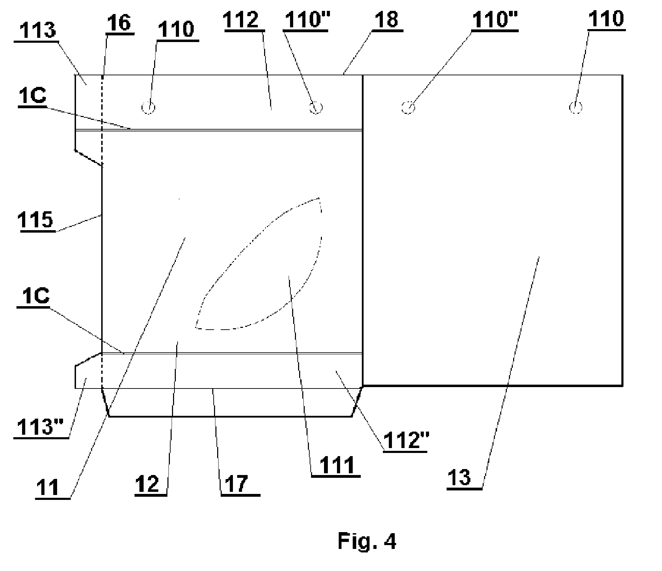

Fig.4 presents the second envelope in unfold intersection;

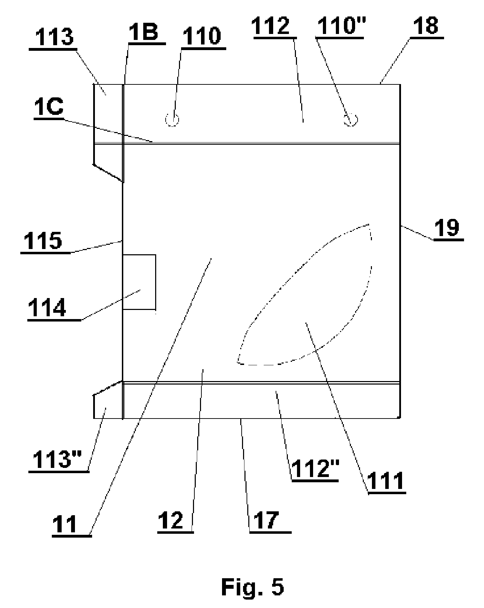

Fig.5 presents the view of the second envelope from the front;

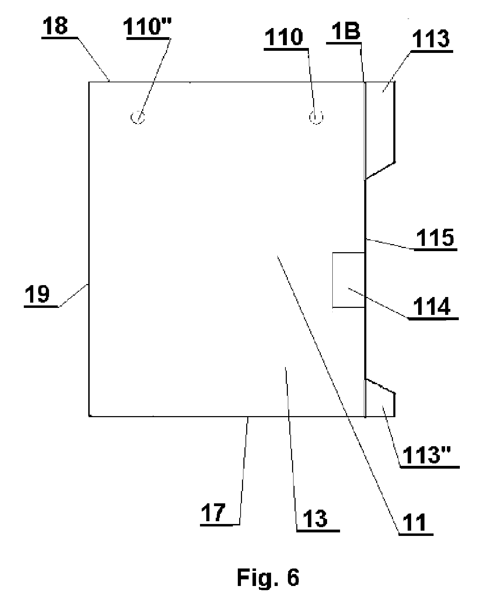

Fig.6 presents the view of the second envelope from the back.

### Example I

An envelope 1 for optical drivers consists of a rectangular pattern from which, after folding along the fold line 9, an envelope is formed. At the extension of the front wall 2, there is a cut performed 4 in the shape of a little tongue, that closes the envelope 1. The tongue 4 is, during automatic packaging and closing of the envelope 1 moved behind the back wall 3 or inside, behind the disc. Parallel to the gluing in edge 5, there is a crease formed A that creates the upper part of the little tongue 4. In the area between the crease A, and the front of the cut 4 there is one crease B parallel to crease A. Parallel to the edge of gluing in 5, above crease A there is one perforation 6 aimed at tearing the envelope out of a magazine. At the extension of the back wall 2, there are two holes performed 10 and 10", placed in relation to each other in such a way that they enable placing envelope 1 in the binder. Additionally on the front wall 2, at any position there is a window cut 11. Moreover, at the side edge 7, of the envelope 1, there is the strip 12 formed by crease C. Parallel to gluing in edge 5, at the height matching the height of the back wall 3, there is a formed crease D.

### Example II

An envelope 1 for optical drivers consists of a rectangular pattern from which, after folding along the fold line 9, an envelope is formed. At the extension of the front wall 3, there is a cut performed 4 in the shape of a polygon, that closes the envelope 1. The polygon 4 is, during automatic packaging and_closing of the envelope 1 moved behind the disc, inside envelope 1. Parallel to the gluing in edge 5, there is a crease formed A that creates the upper part of the little tongue 4. In the area between a crease A, and the front of the cut in the shape of a polygon 4 there is one crease B parallel to crease A. Parallel to the edge of gluing in 5, above crease A there is one perforation 6 aimed at tearing the envelope out of a magazine. Additionally on the front wall 2, at any position there is a window cut 11. Moreover, at the side edge 7,of the envelope 1, there is the strip 12 formed by crease C, and at the side edge 8 the is a strip formed 12". Parallel to gluing in edge 5, at the height matching the height of the back wall 2, there is a formed crease D. On strip 12 there are two holes performed 10 and 10" used for placing the envelope in a binder.

### Example III

An envelope 11 for optical drivers consists of a rectangular pattern from which, after folding along the fold line 19, an envelope is formed. At the open edge of sliding 115 the optical disc, in envelope 11, behind perforation 16, there are at least two projections 113 and 113", that constitute extension of front wall 12. At the side edge 17 and side edge 18 of the envelope 11 there are, formed by the crease 1C strips 112 and 112". There are two holes 110 and 110" performed in strip 112" use for placing the envelope in the binder. Additionally, on the front wall 12 there is a window cut 111 at any position. Moreover, the open edge of sliding the optical disc 115 is sealed with a sticker 114 made of foil or paper that prevents the disc from falling out of an envelope 11.

## Claims

1. An envelope for optical drivers consists of a rectangular pattern from which, after folding along the fold line, an envelope is formed, distinguishing by that at the extension of the front wall (2), or at the extension of the back wall (3) there is a cut (4), which closes the envelope (1).

2. The envelope according to claim 1, distinguishing by that parallel to the edge of gluing in (5) there is a crease formed (A), that creates the upper edge of the cut (4).

3. The envelope according to claim 2, distinguishing by that in the area between a crease (A), and the front of the cut (4) there is at least one crease (B) parallel to crease (A).

4. The envelope according to claim 2 or 3, distinguishing by that crease (A) and crease (B) are a perforation.

5. The envelope according to claim 1, distinguishing by that parallel to the edge of gluing in (5), above crease (A) there is at least one perforation (6).

6. The envelope according to claim 1, distinguishing by that at the extension of the front wall (2) or back wall (3) there are two holes performed (10) and (10").

7. The envelope according to claim 1, distinguishing by that on the front wall (2), or on the back wall (3), at any position there is a window cut (11).

8. The envelope according to claim 1, distinguishing by that at the side edge (7) or at the side edge (8) of the envelope (1) there are strips (12) and (12") formed by a crease (C).

9. The envelope according to claim 1 and 8, distinguishing by that parallel to gluing in edge (5), at the height matching the height of the opposite wall of the envelope (1) there is a crease formed (D), ending at the height of a crease (C).

10. The envelope according to claim 1 and 8, distinguishing by that a crease (D) runs along the whole width of the envelope (1), parallel to gluing in edge (5).

11. The envelope according to claim 8, distinguishing by that holes (10) and (10") are made on strip (12) or strip (12").

12. The envelope according to claim 1, distinguishing by that the cut (4) has the shape of a little tongue.

13. The envelope according to claim 1, distinguishing by that the cut (4) has the shape of a polygon.

14. The envelope for optical drivers consists of a rectangular pattern from which, after folding along the fold line, an envelope is formed, distinguishing by that at the open edge of sliding the optical disc (115) of the envelope (11), behind perforation (16), or crease (1B) there are at least two projections formed (113) and (113"), that constitute extension of the front wall (12) or back wall (13) of the envelope (11).

15. The envelope according to claim 14, distinguishing by that at the side edge (17) and/or side edge (18) of the envelope (11) there are, formed by a crease (1C) strips (112) and (112").

16. The envelope according to claim15, distinguishing by that on the strips (112) and (112") there are two holes performed (110) and (110").

17. The envelope according to claim 14, distinguishing by that on the front wall (12), or on the back wall (13), at any position there is a window cut (111).

18. The envelope according to claim 15, distinguishing by that the open edge of sliding the optical disc (115) is sealed with a sticker (114) made of foil or paper.
